# EUROPEAN PATENT SPECIFICATION

(11) **EP 0 978 370 B1**
(45) Date of publication and mention of the grant of the patent: **19.02.2003**
(21) Application number: 99306074.8
(22) Date of filing: 30.07.1999
(51) Int. Cl.: B29D 30/06, B29C 35/02

(54) **Vulcanising method and vulcanising apparatus for a tyre**
Verfahren und Vorrichtung zum Vulkanisieren von Reifen
Procédé et appareil de vulcanisation de pneumatiques

(30) Priority: 03.08.1998 JP 21910298
(43) Date of publication of application: 09.02.2000
(73) Proprietor: Sumitomo Rubber Industries Ltd., Kobe-shi, Hyogo-ken (JP)
(72) Inventor: Kobayashi, Michihito, Toyota-shi, Aichi-ken (JP)
(74) Representative: Stewart, Charles Geoffrey

(56) References cited:
- EP-A- 0 183 450
- EP-A- 0 513 348
- FR-A- 2 619 337
- US-A- 2 370 624
- US-A- 2 451 992
- DATABASE WPI Week 198029 Derwent Publications Ltd., London, GB; AN 1980-50932C XP002146337 & JP 55 074854 A (BRIDGESTONE TIRE), 5 June 1980 (1980-06-05)

## Description

The present invention relates to a vulcanising method and a vulcanising apparatus for a tyre capable of vulcanising a tyre at optimal temperature in various portions of the tyre so as to enhance the performance of the tyre.

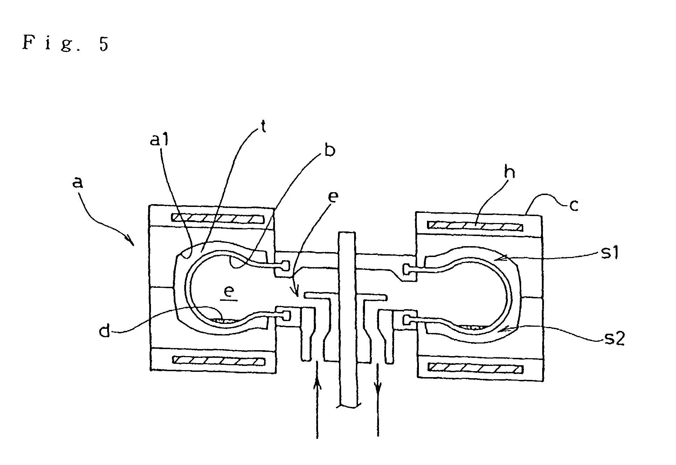

In general, when a tyre is vulcanised, as shown in Fig. 5, a vulcanising apparatus is used comprising an outer mould (a) having a tyre forming cavity (al), and a bladder (b) for pushing a raw tyre (t) against an inner peripheral surface of the tyre forming the cavity (a1). The tyre is heated from the outside by heat transmitted from heaters (h) provided on upper and lower platen plates (c) which is conducted through the outer mould (a). The tyre is heated from the inside by filling the bladder (b) with a high temperature thermal pressure medium (e) and the outside and inside of the tyre are controlled to be at a constant temperature.

On the other hand, characteristics required by different portions of the tyre such as tread portion, side wall portion, and bead portion are different. For example, the tread portion requires grip properties, wear resistance, crack resistance, and the like so as to provide on contact with the ground transmission of the driving and braking forces. The side wall portion requires flexibility, crack resistance and weather resistance so as to prevent the carcass from being damaged and so that the side wall portion can be bent flexibly. The bead portion requires rigidity and wear resistance so that the tyre is fitted and held on the rim. Therefore, different compound rubbers are used for different portions of the tyre for satisfying the individual requirements. Finally, as tyres became more and more sophisticated and the production output became higher in recent years, the characteristics of the compound rubbers are enhanced further.

In order to allow the individual compound rubbers to exhibit the individual characteristics sufficiently, it is desirable to vulcanise the individual compound rubbers at optimal vulcanising temperature.

However, in the conventional vulcanising apparatus, since the outside and inside of the tyre are controlled at a constant temperature, it is difficult to sufficiently exploit the performance of the compound rubber, and the tyre performance is not optimised.

Especially in steam vulcanising heated curing using saturated steam as the thermal pressure medium, or in a gas vulcanising method using a thermal pressure medium which is a mixture of steam and inert gas such as nitrogen gas, steam condensed in vulcanisation tends to be accumulated at the lower side (s2) as condensate (d), or low temperature inert gas and high temperature steam tend to be separated to the top and bottom regions of the bladder (b). As a result, uneven temperature occurs between the upper side (s1) and lower side (s2) of the inner surface of the tyre (t), which promotes deterioration of the tyre performance.

In Japanese Patent Publication JP-A-6-18699, it has been proposed to change the temperature of the outer mould depending upon each of the particular portions of the tyre (tread portion and side wall portion) so as to vulcanise the compound rubber at optimal vulcanising temperature. However, the various portions of the tyre are uniformly heated on the inside through the bladder by the usual thermal medium in the steam vulcanising method or in the gas vulcanising method, and uneven temperature still is generated between the upper and lower sides (s1) and (s2) and therefore, it is difficult to sufficiently optimise the vulcanisation.

In US 2 451 992 which relates to curing a tyre using high frequency electrical energy to heat the tyre it is proposed in the inner shaping bladder which is flexible and stretchable to provide conductive wires or a mesh which is stretchable as metallic conductors for electrical energy.

In EP 183 450 curing a tyre is disclosed using electric current induced electro-magnetically. This can provide different amounts of heat input in different parts of the tyre but utilises a rubber curing bag inside the tyre.

Thereupon, it is an object of the present invention to provide a vulcanising method and a vulcanising apparatus capable of vulcanising various portions of the tyre under optimal temperature condition without generating uneven temperature between upper and lower portions, and thus capable of enhancing the tyre performance.

Accordingly a first aspect of the present invention provides a vulcanising method for vulcanising a tyre as set out in claim 1.

The outer forming surface of the outer mould may also be divided into a plurality of outer forming surface portions in accordance with portions of the tyre along the outline of the tyre meridian cross section, and the temperatures of the outer forming surface portions are varied to vulcanise each of the portions of the tyre.

A second aspect of the invention provides a vulcanising apparatus for a tyre as set out in claim 3.

The outer forming surface of the outer mould may also be divided into a plurality of outer forming surface portions in accordance with portions of the tyre along an outline of a tyre meridian cross section, and the outer mould is provided with heaters capable of heating the outer forming surface portions at different temperatures.

An embodiment of the present invention will be explained, by way of example only, together with the drawings below in which:
Fig. 1 is a sectional view of a vulcanising apparatus of an embodiment of the present invention;
Fig. 2 is a sectional view showing the state during vulcanising and forming of the tyre;
Fig. 3 is a sectional view for explaining the standby state of the vulcanising apparatus in which an upper platen plate rises;
Fig. 4 is a sectional view for explaining motions of side moulds and segments when the upper platen plate is lowered; and
Fig. 5 is a schematic view for explaining a conventional tyre vulcanising method and apparatus.

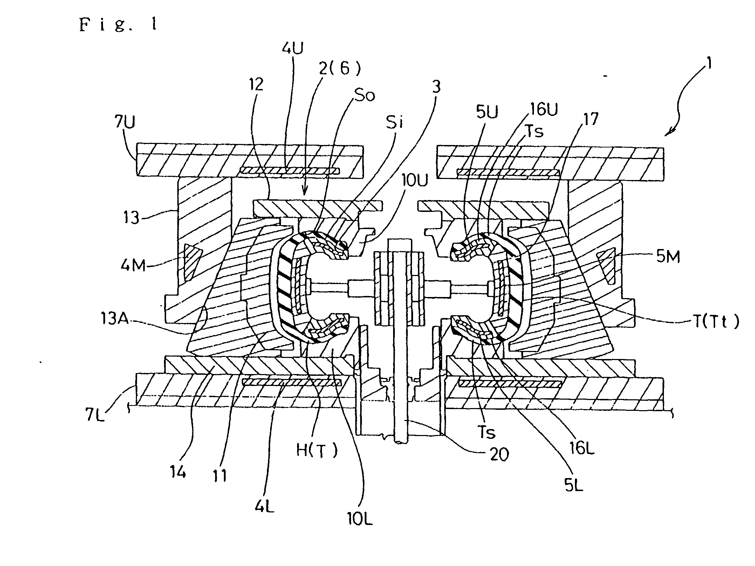

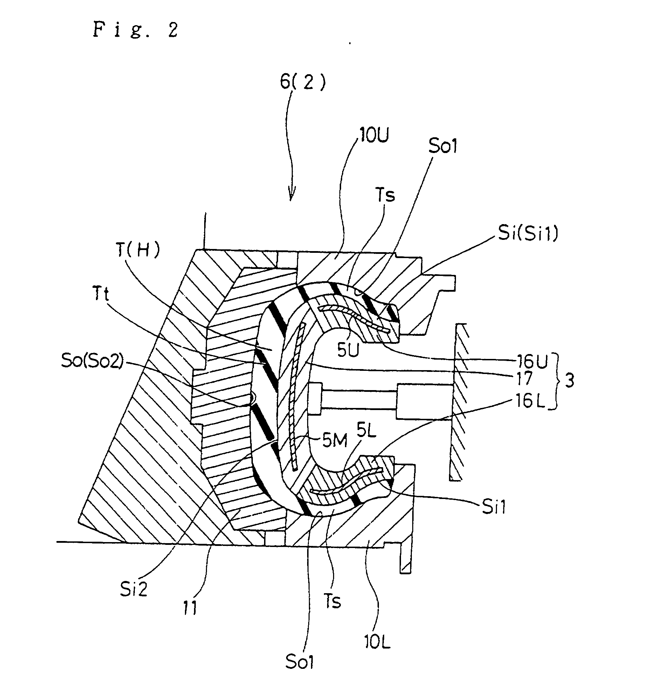

In Fig. 1 various portions of the tyre (shown in Fig. 2) which are side walls Ts and a tread Tt are vulcanised at respective temperature in accordance with its compound rubbers.

In the drawings, the vulcanising apparatus 1 comprises an outer mould 2 having an outer forming surface So for forming the outer surface of the tyre T, and an inner mould 3 having an inner forming surface Si for forming the inner surface. The tyre T is vulcanised and formed in a tyre forming cavity H surrounded by the outer forming surface So and the inner forming surface Si. In said cavity the tyre is held under pressure and heat is put into the compound to cure it.

The outer mould 2 includes an outer mould body 6 constituting the outer forming surface So, and heated plate-like upper and lower platen plates 7U and 7L including heaters. The lower platen plate 7L is fixed to a table (not shown), and the upper platen plate 7U is vertically movably mounted to a press (not shown). Thus the platens can be used to close the mould, hold it closed and to supply heat.

In this example, the outer mould body 6 is of a type which is divided into a plurality of portions in its circumferential direction, and comprises upper and lower side moulds 10U and 10L for forming outer surface of the side walls Ts, and a plurality of segments 11 which are divided in the circumferential direction for forming an outer surface of the tread Tt. When the mould is closed by the platens, each of the divided surfaces of the upper and lower side moulds 10U, 10L and the segments 11 abut against one another, thereby forming a continuous outer forming surface So.

As shown in Fig. 2, the outer mould body 6 is divided so that the outer forming surface So comprises outer forming surface portions Sol, So1 to form the side moulds 10U, 10L corresponding to the side walls Ts of the tyre, and an outer forming surface portion So2 comprising the segments 11 corresponding to the tread Tt. Therefore, the outer forming surface So is divided along the outline of the tyre meridian cross section into a plurality of outer forming surface portions in accordance with different portions of the tyre.

The segments 11 are slidably held by an inclined linear bearing 13A of a ring 13 fixed to the upper platen plate 7U. The upper side mould 10U is mounted to a lower surface of a disc-like holding plate 12 placed between upper ends of the segments 11 such as to be astride the upper ends, and the lower side mould 10L is fixed to the lower platen plate 7L through a holding plate 14.

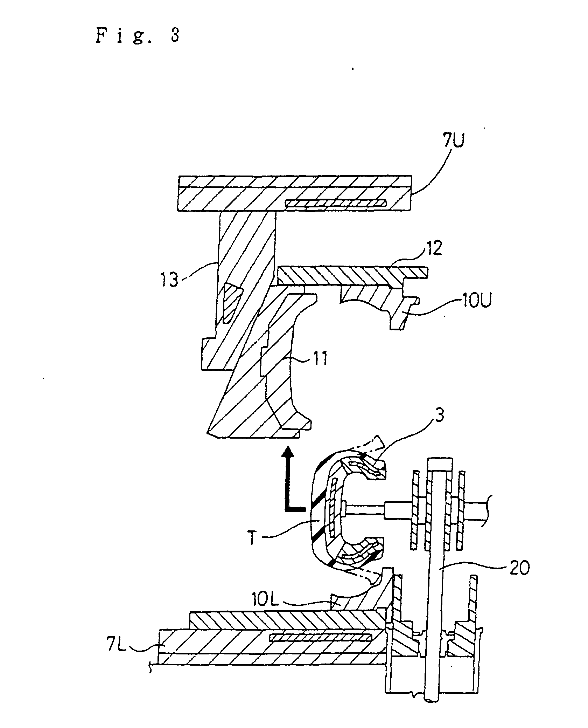

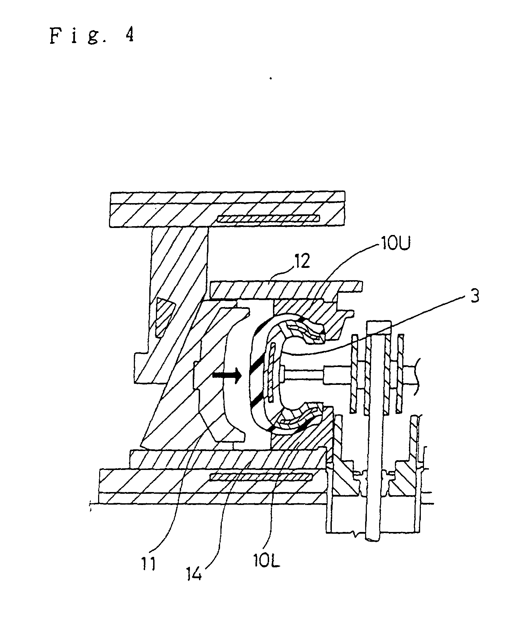

Therefore, as shown in Figs. 3 and 4, as the upper platen plate 7U is moved upward by the press, the segment assembly is increased in diameter so as to separate from the tyre T by means of the segments 11 moving in a radially outwards direction and then, they are moved upwards together with the upper side mould 10U which is placed on the upper ends of the segments 11. When the segments 11 and the upper side mould 10U are moved upwards in this manner, the tyre T can be removed and a new unvulcanised green tyre carcass put in place. In the closed state of the tyre forming cavity H in the lowering motion, the outer mould body 6 closely abuts against the platen plates 7U, 7L through the holding plates 12, 14 and the actuator 13.

The platen plates 7U, 7L and the ring 13 are provided with heaters 4U, 4L, 4M comprising electric heaters or steam jackets. Therefore, the outer forming surface portions So1, So1 are heated by the heaters 4U, 4L, and the outer forming surface So2 is heated by the heater 4M.

The inner mould 3 is a toroidally shaped rigid metal body provided with inner mould pieces 16U, 16L corresponding to the side walls Ts, and a central inner mould piece 17 corresponding to the tread Tt and integrally connected to the inner mould pieces 16U, 16L. The inner forming surface Si is formed by an outer surface of the inner mould 3. Therefore, the inner forming surface Si of the inner mould 3 is also divided into a plurality of inner forming surface portions in accordance with portions of the tyre along the outline of the tyre meridian cross section, i.e., divided into inner forming surface portions Si1, Si1 comprising the inner mould pieces 16U, 16L corresponding to the side walls Ts, and an inner forming surface portion Si2 comprising the central inner mould piece 17.

In this example, the inner mould pieces 16U, 16L, 17 are provided with electric heaters 5U, 5L, 5M, and the inner forming surface portions Si1, Si1 and Si2 are individually heated.

The inner mould 3 is vertically movably supported by a supporting shaft 20 extending concentrically with the tyre axis. As shown in Fig. 3, the supporting shaft 20 can be moved upwards to an upper standby position of the platen plate 7U, the raw tyre T is placed around the outer periphery of the inner mould 3, and the inner mould 3 is lowered to the normal vulcanising and forming position. In the outer mould 2, as the platen plate 7U is lowered, as shown in Fig. 4, a state in which the tyre T is held between the side moulds 10U, 10L is once established and then, the segments 11 are moved radially inwards sliding between the holding plates 12, 14.

At the closed press position of the platen plate 7U, as shown in Fig. 2, the divided surfaces of the side moulds 10U, 10L and the segments 11 abut against each other, the tyre T in the closed tyre forming cavity H is clamped and compressed, thereby allowing vulcanising and forming by the heat and pressure provided.

Here, the vulcanising apparatus 1 and the vulcanising method of the present application are characterised in that the temperatures of the inner forming surfaces portions Si1, Si2 of the inner mould 3 are varied from one another by controlling the heaters 5U, 5L and 5M, and so various portions of the tyre, i.e., the side walls Ts and the treat Tt are vulcanised at different vulcanising temperatures.

Thus in the present application, the vulcanising temperature at which the characteristics of each compound rubber used for each of the portion of the tyre can be effectively selected, and the temperature of each of the portions is controlled by the inner forming surface portions Si1, Si2. Since the present application makes it possible to control the temperature at the inside of the tyre which previously had uneven temperatures between upper and lower portions in the conventional technique, it is possible to vulcanise each of the compound rubbers at more suitable temperature as compared to the processing systems in which the temperature is controlled from outside the tyre.

More preferably, the temperatures of the outer forming surface portions So1, So2 are also varied from one another by controlling the heaters 4U, 4L and 4M, and the tyre is heated from both inside and outside the tyre at temperatures suitable for each of the compound rubbers.

According to the present application, it is possible not only to optimise the vulcanisation in accordance with the different compound rubbers, but also to prevent excessive or insufficient vulcanisation based on variations in thickness of the rubber components.

More specifically, in previous systems the vulcanising time of a tyre is usually set such that the tread Tt which has the greatest tyre thickness is not insufficiently vulcanised but the side walls Ts which largely contribute to the performance of the tyre particularly in respect of rolling resistance have the smallest thickness and thus are excessively vulcanised, and characteristics of both are not fully obtained. By the present invention reducing the temperatures of the inner and outer forming surface portions Si1, So1 corresponding to the side walls Ts so they are cooler than the temperatures of the inner and outer forming surface portions Si2, So2 corresponding to the tread Tt, it is possible to avoid excessive vulcanisation, and to allow the required tyre performance to be exhibited to the utmost.

For the heaters 4 and 5, it is possible to employ various heaters such as electric heater and the steam jacket as described above, and various temperature controlling methods can be used in accordance with the kind of the heaters used.

It is preferable that heat insulators are interposed between the inner mould pieces 16U, 16L and 17 for keeping the temperature difference between the inner forming surface portions Si1 and Si2.

Although the tread Tt and the side walls Ts are indicated as portions of the tyre in this example, a bead can also be added, and the tyre may be divided appropriately in accordance with the kinds of the compound rubbers to be used or the thickness of the rubber.

To prove the invention a tyre (size of 205/60R15) having side wall compound attaching which is superior for fuel efficiency (rolling resistance) were cured, using the vulcanising apparatus shown in Fig. 1. The heaters 4U, 4L, 4M of the outer mould 2 and the heaters 5U, 5L, 5M of the inner mould 3 were controlled at different temperatures based on the specifications shown in Table 1, and the fuel efficiency of the finished tyre was measured. The temperature of the tyre at its side which was in contact with each of the forming surface portions (a surface portion corresponding to a forming surface portion in a comparative example) during vulcanising was measured, and its results are shown in Table 1.

Further, as a second comparative example, a tyre was vulcanised and formed in the conventional steam vulcanising method shown in Fig. 5 in which steam of 14 kgf/cm² was charged into the bladder. The fuel efficiency of the finished tyre was measured and compared with the first test. In the comparative example, the temperature was controlled from outside the tyre as in the same manner as that of the present embodiment by heaters 4U, 4L and 4M.

Each of tyres were mounted on a standard rim, the rolling resistance was measured at standard internal pressure at 80 km/hr at load of 400 kgf using a rolling resistance testing machine, and the fuel efficiency was indicated as an index with the comparative tyre set at 100. The fuel efficiency is better as the index is smaller.

**Table 1**

| | Example | Comparative Example |
|---|---|---|
| Heaters of outer mould | | |
| Set temperature (degrees) | | |
| 4U | 165 | 165 |
| 4L | 165 | 165 |
| 4M | 180 | 180 |
| Heaters of inner mould | | |
| Set temperature (degrees)* | | |
| 5U | 165 | 185 |
| 5L | 165 | 175 |
| 5M | 180 | 180 |
| Temperature (degrees) of tyre at the side of | | |
| outer forming surface portion | | |
| Si1 (Up) | 160 | 160 |
| Si1 (Down) | 160 | 160 |
| Si2 | 170 | 170 |
| Temperature (degrees) of tyre at the side of | | |
| inner forming surface portion | | |
| Si1 (Up) | 165 | 185 |
| Si1 (Down) | 165 | 175 |
| Si2 | 180 | 180 |
| Vulcanising time (minutes) | 13 | 13 |
| Fuel efficiency (index) | 96 | 100 |

| | | |
|---|---|---|
| * Steam temperature in steam vulcanising method in the case of the comparative example | | |

As shown in Table 1, it was confirmed that in the present embodiment, since the vulcanising temperature at the side walls Ts was suppressed, excessive vulcanisation was prevented, and the fuel efficiency was enhanced.

As described above, according to the present invention, since the heating temperatures are varied from inside the tyre in accordance with portions of the tyre using an inner mould which forms an inner surface of the tyre, it is possible to vulcanise each of the portions of the tyre under optimal temperature condition without generating uneven temperature between upper and lower portions, and it is possible to enhance the performance of the tyre.

## Claims

1. A vulcanising method for vulcanising a tyre (T) by heating from an outer forming surface (So) and an inner forming surface (Si) of a vulcanising apparatus comprising an outer mould (2) having said outer forming surface (So) for forming the outer surface of said tyre and an inner mould (3) having said inner surface (Si) for forming an inner surface of the tyre, **characterised in that** said inner mould (3) is divided into a plurality of inner mould pieces (16U,16L,17) made of a metal material, so that said inner forming surface (Si) is divided into a plurality of inner forming surface portions (Si1,Si1,Si2) in accordance with portions (Ts,Tt) of said tyre (T) along an outline of a tyre meridian cross section, and said inner forming surface portions (Si1,Si1,Si2) are at a different temperature so that the different portions (Ts,Tt) of said tyre (T) are vulcanised at different vulcanising temperatures.

2. A vulcanising method of a tyre according to claim 1, **characterised in that** the outer forming surface (So) of said outer mould (2) is divided into a plurality of outer forming surface portions (So1,So1,So2) in accordance with portions (Ts,Tt) of the tyre along said outline of said tyre meridian cross section, and said outer forming surface portions (So1,So1,So2) are at different temperatures so that the different portions (Ts,Tt) of said tyre (T) are vulcanised at different vulcanising temperatures.

3. A vulcanising apparatus for a tyre comprising an outer mould (2) having an outer forming surface (So) for forming an outer surface of the tyre (T) and an inner mould (3) having an inner surface (Si) for forming an inner surface of the tyre, **characterised in that** the said inner mould (3) is divided into a plurality of inner mould pieces (16U,16L,17) made of a metal material, so that said inner forming surface (Si) of the inner mould (3) is divided into a plurality of inner forming surface portions (Si1,Si1,Si2) in accordance with portions (Ts,Tt) of the tyre along an outline of a tyre meridian cross section, and each of said inner mould pieces (16U,16L,17) is provided with heaters (5U,5L,5M) capable of heating said inner forming surface portions (Si1,Si1,Si2) at different temperatures.

4. A vulcanising apparatus of a tyre according to claim 3, **characterised in that** the outer forming surface (So) of said outer mould (3) is divided into a plurality of outer forming surface portions (So1) in accordance with portions of the tyre (T) along an outline of a tyre meridian cross section, and the outer mould (2) is provided with heaters capable of heating the outer forming surface portions (So1) at different temperatures.

5. A vulcanising method of a tyre according to claim 1, **characterised in that** heat insulators are interposed between said inner mould pieces (16U,16L,17) for keeping the temperature difference between the inner forming surface portions.

6. A vulcanising apparatus of a tyre according to claim 3, **characterised in that** heat insulators are interposed between said inner mould pieces (16U,16L,17) for keeping the temperature difference between the inner forming surface portions.

## Patentansprüche

1. Vulkanisierverfahren zum Vulkanisieren eines Reifens (T) durch Aufheizen von einer äußeren Formungsoberfläche (So) und einer inneren Formungsoberfläche (Si) einer Vulkanisiervorrichtung, umfassend eine äußere Form (2) mit der äußeren Formungsoberfläche (So) zur Formung der äußeren Oberfläche des Reifens, und eine innere Form (3) mit der inneren Oberfläche (Si) zur Formung einer inneren Oberfläche des Reifens, **dadurch gekennzeichnet, dass** die innere Form (3) in eine Vielzahl von inneren Formstücken (16U, 16L, 17) bestehend aus einem Metallmaterial unterteilt wird, so dass die innere Formungsoberfläche (Si) in eine Vielzahl von Abschnitten (Si1, Si1, Si2) der inneren Formungsoberfläche in Übereinstimmung mit Abschnitten (Ts, Tt) des Reifens (T) entlang eines Umrisses eines Meridionalquerschnittes des Reifens unterteilt wird, und dass sich die Abschnitte (Si1, Si1, Si2) der inneren Formungsoberfläche auf einer unterschiedlichen Temperatur befinden, so dass die unterschiedlichen Abschnitte (Ts, Tt) des Reifens (T) bei unterschiedlichen Vulkanisiertemperaturen vulkanisiert werden.

2. Vulkanisierverfahren für einen Reifen nach Anspruch 1, **dadurch gekennzeichnet, dass** die äußere Formungsoberfläche (So) der äußeren Form (2) in eine Vielzahl von Abschnitten (So1, So1, So2) der äußeren Formungsoberfläche in Übereinstimmung mit Abschnitten (Ts, Tt) des Reifens entlang des Umrisses des Meridionalquerschnittes des Reifens unterteilt wird, und dass sich die Abschnitte (So1, So1, So2) der äußeren Formungsoberfläche auf unterschiedlichen Temperaturen befinden, so dass die unterschiedlichen Abschnitte (Ts, Tt) des Reifens (T) bei unterschiedlichen Vulkanisiertemperaturen vulkanisiert werden.

3. Vulkanisiervorrichtung für einen Reifen umfassend eine äußere Form (2) mit einer äußeren Formungsoberfläche (So) zur Formung einer äußeren Oberfläche des Reifens (T) und eine innere Form (3) mit einer inneren Oberfläche (Si) zur Formung einer inneren Oberfläche des Reifens, **dadurch gekennzeichnet, dass** die innere Form (3) in eine Vielzahl von inneren Formstücken (16U, 16L, 17) bestehend aus einem Metallmaterial unterteilt ist, so dass die innere Formungsoberfläche (Si) der inneren Form (3) in eine Vielzahl von Abschnitten (Si1, Si1, Si2) der inneren Formungsoberfläche in Übereinstimmung mit Abschnitten (Ts, Tt) des Reifens entlang eines Umrisses eines Meridionalquerschnittes des Reifens unterteilt ist, und jedes der inneren Formstücke (16U, 16L, 17) mit Heizgeräten (5U, 5L, 5M) versehen ist, die in der Lage sind, die Abschnitte (Si1, Si1, Si2) der inneren Formungsoberfläche auf unterschiedliche Temperaturen aufzuheizen.

4. Vulkanisiervorrichtung für einen Reifen nach Anspruch 3, **dadurch gekennzeichnet, dass** die äußere Formungsoberfläche (So) der äuβeren Form (3) in eine Vielzahl von Abschnitten (So1) der äußeren Formungsoberfläche in Übereinstimmung mit Abschnitten des Reifens (T) entlang eines Umrisses eines Meridionalquerschnittes des Reifens unterteilt ist, und dass die äußere Form (2) mit Heizgeräten versehen ist, die in der Lage sind, die Abschnitte (So1) der äußeren Formungsoberfläche auf unterschiedliche Temperaturen aufzuheizen.

5. Vulkanisierverfahren für einen Reifen nach Anspruch 1, **dadurch gekennzeichnet, dass** Wärmedämmstoffe zwischen den inneren Formstücken (16U, 16L, 17) zur Einhaltung der Temperaturdifferenz zwischen den Abschnitten der inneren Formungsoberfläche angeordnet sind.

6. Vulkanisiervorrichtung für einen Reifen nach Anspruch 3, **dadurch gekennzeichnet, dass** Wärmedämmstoffe zwischen den inneren Formstücken (16U, 16L, 17) zur Einhaltung der Temperaturdifferenz zwischen den Abschnitten der inneren Formungsoberfläche angeordnet sind.

## Revendications

1. Procédé de vulcanisation d'un pneumatique (T) par chauffage depuis une surface externe (So) de façonnage et une surface interne (Si) de façonnage d'un appareil de vulcanisation comprenant un moule externe (2) ayant la surface externe (So) de façonnage destinée à former la surface externe du pneumatique et un moule interne (3) ayant la surface interne (Si) de façonnage d'une surface interne du pneumatique, **caractérisé en ce que** le moule interne (3) est divisé en plusieurs pièces (16U, 16L, 17) de moule interne formées d'un matériau métallique afin que la surface interne (Si) de façonnage soit divisée en plusieurs parties de surface interne (Si1, Si1, Si2) de façonnage correspondant à des parties (Ts, Tt) du pneumatique (T) le long d'un profil en coupe méridienne du pneumatique, et les parties de surface interne (Si1, Si1, Si2) de façonnage sont à une température différente afin que les parties différentes (Ts, Tt) du pneumatique (T) soient vulcanisées à des températures différentes de vulcanisation.

2. Procédé de vulcanisation d'un pneumatique selon la revendication 1, **caractérisé en ce que** la surface externe (So) de façonnage du moule externe (2) est divisée en plusieurs parties de surface externe (So1, So1, So2) de façonnage correspondant aux parties (Ts, Tt) du pneumatique le long du profil de la section méridienne du pneumatique, et les parties de surface externe (So1, So1, So2) de façonnage sont à des températures différentes telles que les parties différentes (Ts, Tt) du pneumatique (T) sont vulcanisées à des températures différentes de vulcanisation.

3. Appareil de vulcanisation d'un pneumatique, comprenant un moule externe (2) ayant une surface externe (So) de façonnage d'une surface externe du pneumatique (T) et un moule interne (3) ayant une surface interne (Si) de façonnage de la surface interne du pneumatique, **caractérisé en ce que** le moule interne (3) est divisé en plusieurs pièces (16U, 16L, 17) de moule interne formées d'un matériau métallique, tel que la surface interne (Si) de façonnage du moule interne (3) est divisée en plusieurs parties de surface interne (Si1, Si1, Si2) de façonnage correspondant à des parties (Ts, Tt) du pneumatique le long d'un profil en coupe méridienne du pneumatique, et chacune des pièces (16U, 16L, 17) du moule interne a des organes de chauffage (5U, 5L, 5M) capables de chauffer les parties de surface interne (Si1, Si1, Si2) de façonnage à des températures différentes.

4. Appareil de vulcanisation d'un pneumatique selon la revendication 3, **caractérisé en ce que** la surface externe (So) de façonnage du moule externe (3) est divisée en plusieurs parties de surface externe (So1) de façonnage correspondant aux parties du pneumatique (T) le long d'un profil en coupe méridienne du pneumatique, et le moule externe (2) est muni d'organes de chauffage capables de chauffer les parties de surface externe (So1) de façonnage à des températures différentes.

5. Procédé de vulcanisation d'un pneumatique selon la revendication 1, **caractérisé en ce que** des isolateurs thermiques sont disposés entre les pièces (16U, 16L, 17) de moule interne afin que la différence de température entre les parties de surface interne de façonnage soit conservée.

6. Procédé de vulcanisation d'un pneumatique selon la revendication 3, **caractérisé en ce que** des isolateurs thermiques sont disposés entre les pièces (16U, 16L, 17) de moule interne afin que la différence de température entre les parties de surface interne de façonnage soit conservée.
